# EUROPÄISCHE PATENTSCHRIFT

(11) **EP 1 058 141 B1**
(45) Veröffentlichungstag und Bekanntmachung des Hinweises auf die Patenterteilung: **27.07.2005**
(21) Anmeldenummer: 00110556.8
(22) Anmeldetag: 18.05.2000
(51) Int. Cl.: G02B 21/00, G02B 21/16

(54) **Mikroskop mit mindestens zwei Strahlteilern**
Microscope having at least two beam-splitters
Microscope muni d'au moins deux séparateur de faisceaux

(30) Priorität: 28.05.1999 DE 19926037
(43) Veröffentlichungstag der Anmeldung: 06.12.2000
(73) Patentinhaber: CARL ZEISS JENA GmbH, 07745 Jena (DE)
(72) Erfinder: Tandler, Hans, Dr.-Ing., 07745 Jena (DE); Schmidt, Stefan, Dr., 07745 Jena (DE)
(74) Vertreter: Hampe, Holger

(56) Entgegenhaltungen:
- GB-A- 2 251 701
- US-A- 3 973 827
- US-A- 5 633 752
- J.S. PLOEM: "The use of a vertical illuminator with interchangeable dichroic mirrors for fluorescence microscopy with incident light" ZEITSCHR. FÜR WISSENSCHAFTL. MIKROSKOPIE, Bd. 68, 1967, Seiten 129-142, XP002150198

## Beschreibung

Reflektormodule für die Fluoreszenzmikroskopie bestehen aus zwei Filtern und dem selektiv wirkenden Teilerspiegel.

Das die Fluoreszenz des Präparates anregende Licht wird durch das Anregungsfilter dem gewählten Applikationsverfahren entsprechend schmalbandig und in der benötigten Wellenlänge zur Verfügung gestellt. Der Teilerspiegel lenkt dieses Licht möglichst effizient durch das Objektiv auf das Präparat. Die dort emittierte Wellenlänge mit einem Versatz bezogen auf das Anregungslicht ins langwellige Spektrum passiert wiederum den Teilerspiegel. Auch dieser zweite Durchtritt durch den Teilerspiegel muß effizient, bezogen auf die Wellenlänge erfolgen. Ein nach dem Teilerspiegel angebrachtes Sperrfilter läßt das emittierte Licht nahezu hundertprozentig durch, die möglichen Anteile des Anregungslichtes aber werden genauso vollständig zurückgehalten.

### Fig. 1

Ausschnitthaft dargestellt ist der über das Anregungsfilter AF einfallende Beleuchtungsstrahlengang BL zur Fluoreszenzanregung in einem nicht dargestellten Mikroskop, der an einem StrahlteilerST in Richtung BL1 eines Objektes über ein nicht dargestelltes Objektiv umgelenkt wird.
Das vom Objekt zurückkommende Licht OL gelangt über einen Sperrfilter SF nach oben in Richtung eines Auswertestrahlenganges mit nicht dargestellter Tubuslinse und beispielsweise einer TV-Kamera .
Ein gestrichelt dargestellter Strahlengang RL zeigt einen unerwünschten Anteil des Beleuchtungslichtes BL, der durch den Strahlteiler ST hindurchgeht und auf die geschwärzte Rückwand R fällt, die diesen unerwünschten Teil des Anregungslichtes möglichst vollständig absorbieren soll.
An dieser Rückwand wird jedoch an unvermeidbaren Ministrukturen der Oberfläche ein Anteil RL1 reflektiert bzw. gestreut und gelangt unter einem Winkel zurück auf die Glasfläche des Strahlteilers ST und von diesem unter einem Winkel zur optischen Achse als unerwünschtes Reflexlicht RL2 in Richtung der Beobachtung/ Detektion.

Durch den Winkel zur optischen Achse kann auch der winkelabhängige Sperrfilter diesen Anteil nicht vollständig ausfiltern.

Ein solches Reflektormodul für die Fluoreszenzmikroskopie ist beispielsweise in der US 5,633,752 beschrieben.

Aus der US 5,745,293 und der FR 2 088 198 sind sogenannte Lichtfallen bekannt, welche hinter einer Öffnung einen reflektierenden Kegel aufweisen, mit dessen Hilfe durch die Öffnung auf die Kegelspitze gerichtetes Licht seitlich so abgelenkt wird, dass es auf absorbierende Materialien fällt und nicht wieder durch die Öffnung zurückgestrahlt wird.

Wie aus Bild 1 ersichtlich, erfolgt durch Reflektormodule bisheriger Bauart eine teilweise ungerichtete Reflexion bzw. Streuung des Anregungslichtes, das den Teiler ohne Reflexion passiert auf den Teiler zurück und dann in den Emissionskanal. Da mit dieser ungerichteten Reflexion die Strahlwinkel so verändert werden, daß sie die richtungsabhängige Selektivität von Teiler und Emissionsfilter durchbrechen, ist die optische Voraussetzung für die Untergrundaufhellung gegeben. Im Emissionskanal sorgt es wie Eigenfluoreszenz von Gläsern und Schichten für eine Aufhellung des Bild-Untergrundes, die den Intensitätsabstand zum Nutzsignal verringert und damit die Detektion von schwachen Fluoreszenzsignalen erschwert oder unmöglich macht. Das ist zu verbessern.

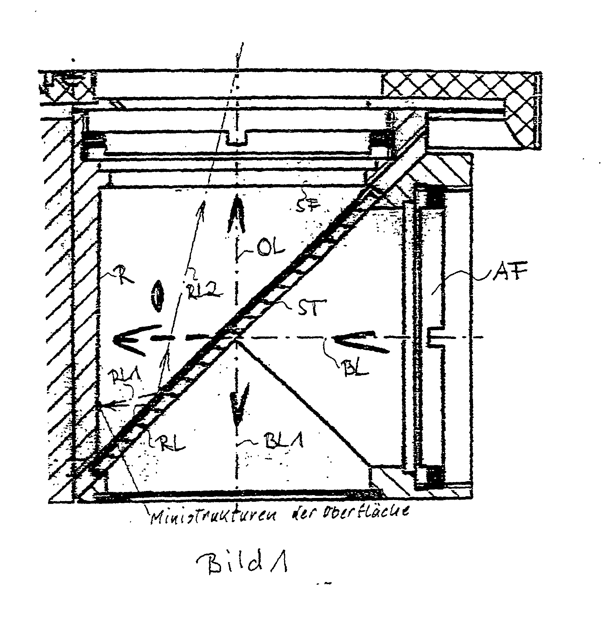

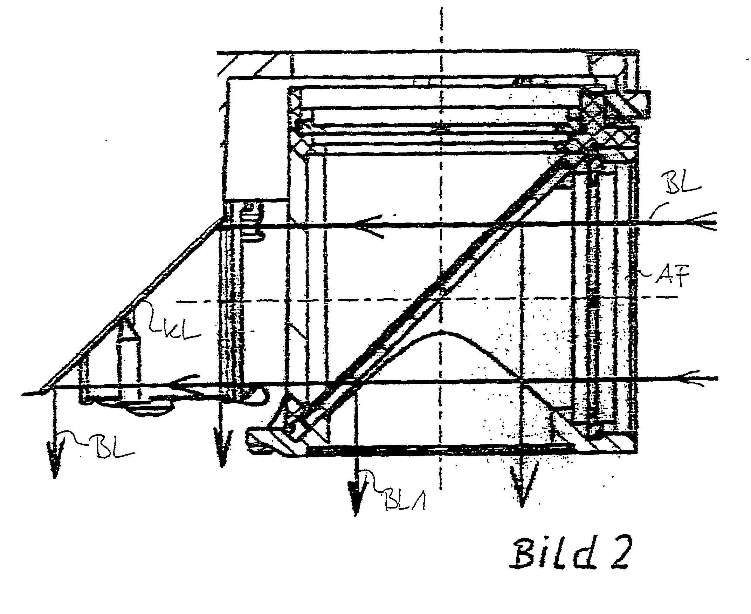

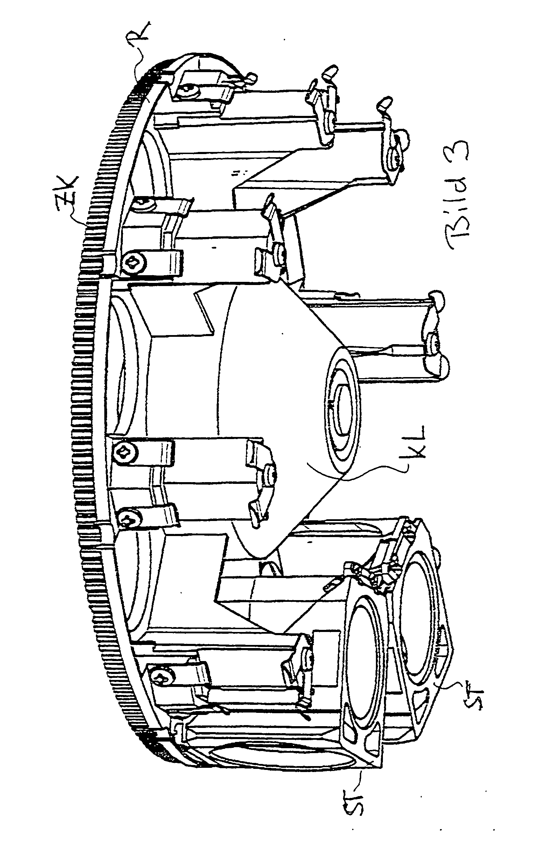

In Fig.2 ist vorteilhaft die Rückwand R entfernt und damit lichtdurchlässig,
und das durchgehende Beleuchtungslicht fällt auf einen im Schnitt dargestellten Kegelmantel KL, der gewährleistet, daß das Licht vollständig aus dem Strahlengang nach unten herausreflektiert wird Dazu eignet sich optimal das im Bild 2 gezeigte Lager der Reflektormodule, das im Hauptschnitt sowohl unter 45° zum einfallenden Licht steht, als auch durch die Kreise unterschiedlichen Durchmessers in den Sagittalschnitten dem Anspruch einer Lichtfalle entspricht.

In Fig.3 ist ein über einen Zahnkranz ZK drehbarer Revolver R dargestellt, der den vorteilhaften Wechsel von bis zu acht unterschiedlichen Strahlteilern in den Strahlengang ermöglicht. Dargestellt sind zwei Strahlteiler ST.
In der Mitte angeordnet ist der Kegelmantel KL, auf den über die offene Rückwand des jeweils eingeschwenkten Strahlteilers die Reflexe gelangen und abgelenkt werden.
Leichte Abweichungen von der Kegelmantelform in Richtung einer leicht shärisch gekrümmten Fläche sind ebenfalls denkbar , oghne den erfinderischen Gedanken der Umleitung der Störreflexe zu verlassen.

## Patentansprüche

1. Mikroskop mit mindestens zwei Strahlteilern (ST), insbesondere zur Untersuchung von fluoreszierenden Proben, wobei ein drehbarer Revolver (R) zur Einschwenkung unterschiedlicher Strahlteiler (ST) vorgesehen ist, **gekennzeichnet dadurch, dass** zur Reflexunterdrückung den eingeschwenkten Strahlteiler (ST) unreflektiert durchdringende Beleuchtungslicht (BL) über eine lichtdurchlässige Öffnung an einer Seite des Strahlteilers (ST) aus dem Beobachtungs/Abbildungsstrahlengang auf eine zumindest teilweise Kegelform aufweisende reflektierende Oberfläche (KL) gelenkt wird, wobei diese zumindest teilweise Kegelform aufweisende Oberfläche als gemeinsame Oberfläche für die unterschiedlichen Strahlteiler ausgestaltet ist und sich in der Mitte des Revolvers (R) befindet.

2. Mikroskop nach Anspruch 1, wobei die Oberfläche (KL) eine glatte polierte Beschichtung aufweist.

3. Mikroskop nach einem der Ansprüche 1 bis 2, wobei mindesten ein Strahlteiler (ST) als Strahlteilerwürfel ausgeführt ist.

## Claims

1. Microscope having at least two beam splitters (ST), in particular for examining fluorescing samples, wherein a rotatable revolver (R) for pivoting-in different beam splitters (ST) is provided, **characterised in that**, for the purposes of reflection suppression, illumination light (BL) passing unreflected through the pivoted-in beam splitter (ST) is directed via a light-permeable orifice on one side of the beam splitter (ST) from the observation/imaging beam path onto a reflecting surface (KL) comprising an at least partially conical shape, wherein this surface comprising an at least partially conical shape is formed as a common surface for the different beam splitters and is located in the middle of the revolver (R).

2. Microscope as claimed in claim 1, wherein the surface (KL) has a smooth polished coating.

3. Microscope as claimed in any one of claims 1 to 2, wherein at least one beam splitter (ST) is formed as a beam splitter cube.

## Revendications

1. Microscope muni d'au moins deux séparateurs de faisceaux (ST), en particulier pour examiner des échantillons fluorescents, où un revolver tournant (R) pour la mise en position de séparateurs de faisceaux différents (ST) est prévu, **caractérisé en ce que** pour la suppression de la réflexion, de la lumière d'éclairage (BL) traversant d'une manière non-réfléchie le séparateur de faisceaux mis en place (ST) est guidée par une ouverture transparente à un côté du séparateur de faisceau (ST) du chemin des rayons d'observation / d'image sur une surface réfléchissante (KL) présentant au moins partiellement une forme conique, où cette surface ayant au moins partiellement une forme conique est réalisée comme surface commune des séparateurs de faisceaux différents et se trouve au milieu du revolver (R).

2. Microscope selon la revendication 1, où la surface (KL) présente un revêtement lisse poli.

3. Microscope selon l'une des revendications 1 à 2, où au moins un séparateur de faisceaux (ST) est réalisé comme dé de séparateur de faisceaux.
